(19) Europäisches Patentamt

European Patent Office

Office européen des brevets

(11) **EP 2 541 850 A1**

(12) **EUROPEAN PATENT APPLICATION**

(43) Date of publication:
**02.01.2013 Bulletin 2013/01**

(51) Int Cl.:
***H04L 12/56*** *(0000.00)*

(21) Application number: **11250620.9**

(22) Date of filing: **30.06.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **British Telecommunications Public
Limited Company
London EC1A 7AJ (GB)**

(72) Inventor: **The designation of the inventor has not
yet been filed**

(74) Representative: **Brinck, Coreena Fiona Anne et al
BT Group Legal
Intellectual Property Department
PP C5A, BT Centre
81 Newgate Street
London
EC1A 7AJ (GB)**

(54) **Determining path congestion measures**

(57)     Methods and apparatus for determining measures indicative of downstream path congestion in respect of a node via which a plurality of data units are traversing an end-to-end path from a sender to a receiver, each data unit having a first indication settable in dependence on information from the receiver to each of at least two states whereby to indicate whether or not respective data units previously received by the receiver experienced congestion on the end-to-end path, and a second indication settable to each of at least two states whereby to indicate whether or not said data unit has experienced congestion on the path from the sender, the first and second indications in respect of a particular data unit being settable independent of one another; the method comprising determining the downstream path congestion measure in dependence on respective counts of the number of said data units having predetermined combinations of first and second indications, and in dependence on an inflation factor count indicating the proportion of data units whose second indication is still capable of being set to indicate that the data unit has experienced congestion on the path from the sender.

Figure 1 - Schematic of typical network

**Description**

**Technical Field**

The present invention relates to determining path congestion measures. More specifically, aspects of the present invention relate to methods and apparatus for the determination of measures indicative of downstream path congestion in respect of a node via which a plurality of data units are traversing an end-to-end path from a sender to a receiver....

**Background to the Invention and Prior Art**

Consider a scenario where one network sends traffic into another network through a mutual attachment point. Mechanisms exist to measure the amount of congestion that this traffic is expected to cause downstream of the measuring point, by monitoring certain metrics that are all visible locally at the attachment point.

It is likely that a downstream network will want to use such a measurement of downstream congestion to in some way constrain the upstream network. For instance, the downstream network may wish to limit the amount of congestion that traffic from the upstream network can cause. It then becomes in the upstream network's interest to try to manipulate the metrics in the traffic in order to pervert the integrity of the measurements to its advantage. The present inventor has identified a need for a measurement technique that is robust to any manipulation by the upstream network to its advantage.

Some basic concepts will now be presented to facilitate understanding of the invention presented later on.

Packets

Data sources typically split the data they send into small units known as packets. A packet consists of a header and a payload. The great majority of packets carried by commercial networks nowadays are so-called Internet Protocol (IP) packets, which means they comply to the format specified in IETF RFC791 [see reference RFC791]. IP ensures the packets are correctly transmitted from the source to the destination. IP is a connectionless protocol - that means each packet carries sufficient information for any IP router to be able to forward it towards its destination without having had to previously set up any per-connection state in the router. Each packet could take a different route to reach the destination. In practice the routing mechanisms on the Internet mean that this seldom happens (unless there is some form of equipment failure).

Re-feedback

One of the functions of a packet header such as the header of an IP packet is to accumulate information about the path it traverses on its way from the sender to the receiver. For instance, the time-to-live (TTL) field is decremented at every IP node or the explicit congestion notification (ECN [see reference: RFC3168]) field is probabilistically marked if the packet experiences congestion (see next section). This path information allows nodes on the path to monitor characteristics of the path experienced so far (the upstream path). Typically mechanisms exist to allow the receiver to feed back this information to the sender.

International application WO2005/096566 describes a mechanism called re-feedback [see reference: [re-feedback] - details later], whereby the source re-inserts into the forward data path this information fed back to it by the receiver that had accumulated along the whole path. The sender may reinsert this information using a separate field in the packet header to that used to accumulate the original path metric or alternatively, it may initialise the value of the metric in the original field to a value that reflects the feedback it receives.

Any node along the path may then monitor the characteristics of the whole path at least a round trip ago. Given any node can already monitor the characteristics of the upstream path, it can subtract this from the re-inserted whole path information to calculate an expectation of the characteristics of the downstream path (the rest of the path still to be traversed by packets it forwards).

Wherever measurements are taken in a network, the result of this subtraction should never be persistently negative, unless the source originally understated the whole path metric. International application W02005/109783 proposes using this fact for a mechanism to detect that a source is persistently understating a characteristic of the path in a flow of packets. The mechanism can sanction the flow accordingly to make it in the source's interests to correctly declare the whole path characteristic to the network. Thus the integrity of the re-inserted feedback information can be assured relative to the original feedback.

**Distributed bandwidth sharing and congestion**

Data traversing the Internet follows a path between a series of routers, controlled by various routing protocols. Each router seeks to move the packet closer to its final destination. If too much traffic traverses the same router in the network, the router can become congested and packets start to experience excessive delays whilst using that network path. If sources persist in sending traffic through that router it could become seriously overloaded (congested) and even drop traffic (when its buffers overflow). If sources still persist in sending traffic through this bottleneck it could force more routers to become congested, and if the phenomenon keeps spreading, that can lead to a congestion collapse for the whole Internet - which occurred regularly in the mid-1980s.

The solution to that problem has been to ensure that sources take responsibility for the rate at which they send data over the Internet by implementing congestion control mechanisms. Sources monitor feedback from the receiver of the metric that characterises path congestion in order to detect when the path their data is following is getting congested, in which case they react by reducing their bit-rate. In the absence of any sign that the path is congested, they may slowly increase their rate.

The typical path characterisation metrics that sources monitor are the average roundtrip time (RTT) for the data path, the variance of the roundtrip time (jitter) and the level of congestion on the path. Congestion is one of the parameters controlling the rate adaptation of a source sending data over a congested path.

The congestion level can be signalled either implicitly (through congested routers dropping packets when their buffers overflow or to protect themselves) or explicitly (through mechanisms such as explicit congestion notification - see next subsection). Currently the most common option is implicit signalling. Historically, routers would drop packets when they got completely saturated (which happens when a traffic burst cannot be accommodated in the buffer of the router) - this policy is called Droptail. Random Early Detection (RED) [see reference: RED] is an improvement where routers monitor the average queue length in their buffer and when the average queue is higher than a given threshold, the router starts to drop packets with a probability which increases with the excess length of the queue over the threshold. It is widely used in today's Internet because it allows sources to react more promptly to incipient congestion and it keeps queues from growing unnecessarily long. Sources using TCP are able to detect losses, because a packet loss causes a gap in the sequence; whenever a TCP source detects a loss, it is meant to halve its data transmission rate, which alleviates the congestion on the router at the bottleneck.

Explicit Congestion Notification

Explicit Congestion Notification (ECN) [see reference: RFC3168] further improves on RED by using a two-bit ECN field in the IP header to signal congestion. It runs the same algorithm as RED, but instead of dropping a packet, it sets its ECN field to the Congestion Experienced (CE) codepoint. The ECN standard requires the sender to echo any congestion mark signalled in the data; for instance, a TCP receiver sets the Echo Congestion Experienced (ECE) flag in the TCP header, which the TCP source interprets as if the packet has been dropped for the purpose of its rate control. In turn the source then reacts to the congestion by halving its transmission rate and notifies the receiver of this using the Congestion Window Reduced codepoint.

The four values of the two-bit ECN field in the IP header are:

- "Non ECT", which signifies that the packet belongs to a flow that doesn't support ECN;
- "ECT(0)" and "ECT(1)", which signify that the packet belongs to a flow that supports ECN and that upstream routers haven't had to mark the packet; and
- "Congestion Experienced" (CE) which signals that a packet has experienced incipient congestion.

Re-ECN

Re-ECN [see reference: re-ECN] is an example of a system that utilises re-feedback to provide upstream and downstream congestion information throughout the network. It is similar to ECN but uses an extra unused bit in the packet header. This bit is combined with the two-bit ECN field to create four extra codepoints.

The simplest way to understand the protocol is to think of each packet as having a different flag (or codepoint) indicating how much the bytes in the packet are worth. At the start of a flow, a cautious flag is used to indicate that the sender does not have sufficient knowledge of the path and all the bytes in the packet are worth +1. Cautious flags are also used whenever the sender becomes unsure about the current state of the path.

By default packets are marked with Neutral flags which indicate that the bytes in the packet are worth zero. If packets encounter congestion during their progress through the network the ECN marking applied by the congested router are considered as Negative flags that make the bytes in the marked packets worth -1. The destination will feed back a count of the number of Negative flags it has seen. For every Negative flagged byte it is informed of, the sender should mark an equivalent number of bytes it sends in a subsequent packet or packets with a Positive flag, which makes all the bytes in that packet worth +1. The Positive flag re-echoes or reinserts the congestion feedback back into the forward-travelling stream of packets, hence the name re-ECN. These Positive flags will not be modified by the network once they are set by the sender.

If a packet has a Positive flag it will sometimes be termed a Positive packet. If it has a Negative flag, it will be termed a Negative packet, and so forth.

There is a small possibility that a Positive packet will in turn be marked Negative by a congested router, but the encodings are chosen so that the original Positive marking survives as well - the bytes in packets with both Positive and Negative markings are considered worth 0 and these packets are described as Cancelled.

At any intermediate node the upstream congestion is given by the proportion of Negative flagged bytes to total bytes. Thus the continually varying congestion level is effectively encoded in a stream of packets by interpreting the stream of Negative or non-Negative (Neutral) markings as a unary encoding of ones or zeroes respectively. Similarly, the congestion level of the whole path is encoded as a stream of Positive or non-Positive (Neutral) markings. The expected downstream congestion from any intermediate node can then be estimated from the difference between the proportion of Positive flags and the proportion of Negative flags, as described in International application WO2006/079845. The difference between the proportions of flags in these two sequences can be thought of as a third virtual sequence of flags on the packets, representing downstream congestion. However, these virtual flags only result from a mathematical operation (subtraction); they do not physically appear on packets.

Congestion Exposure (ConEx)

In June 2010, the Internet Engineering Task Force (IETF) chartered a new Congestion Exposure (ConEx) working group to add re-feedback of path congestion to the Internet Protocol (IP - initially IPv6) and to make the necessary modifications to the Transmission Control Protocol (TCP), both as experimental standards. The ConEx protocol will be based on the re-ECN protocol, but it will be slightly different because it is required to be usable independently of ECN, although it is recognised that its full benefit is only possible with ECN [see reference: conex-mech].

The final form of the ConEx protocol to be standardised by the IETF is not yet determined. Therefore in this specification the re-ECN protocol will be used as a concrete embodiment, given it has been fully specified and implemented.

Perverting the integrity of downstream path characteristics

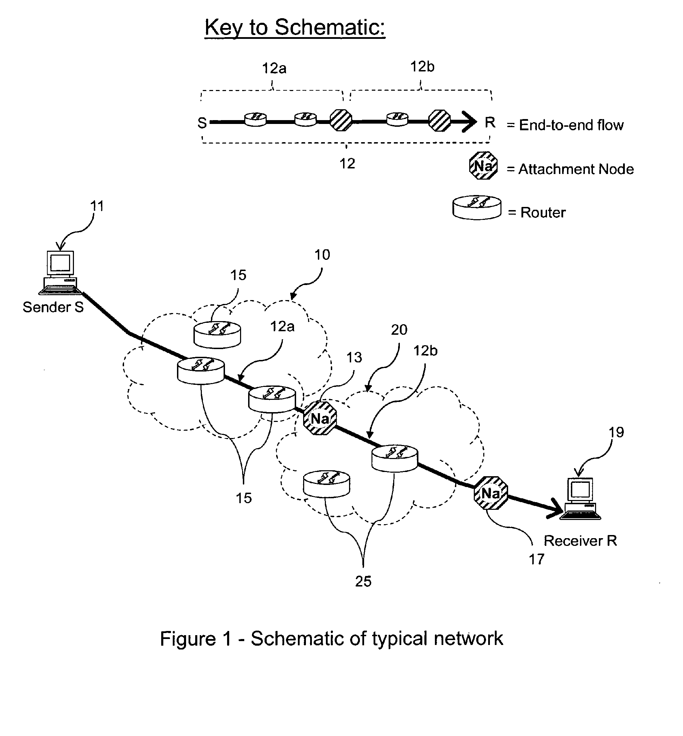

It has been recognised in section 4.4 of [re-ecn-motive] that, if downstream path characterisation is calculated by taking the difference between two superimposed unary encodings such as is disclosed in WO2006/079845, it seems possible to pervert the integrity of this characterisation. An example scenario will now be described using **Figure 1,** then it will be used to show the potential extent of this problem.

A data sender "S" 11 is attached to a network such as a data centre 10 both of which may be owned by the same data centre operator. The data centre is in turn attached to an access network 20 via a network attachment node "Na" at an attachment point 13. A data receiver "R" 19 attaches to the same access network at a network attachment node at attachment point 17. Network 10 includes routers 15. Network 20 includes routers 25.

For the purpose of this explanation, Figure 1 shows a single end-to-end path 12 (see "Key to Schematic"), along which packets flow from sender "S" 11 to receiver "R" 19. From the point of view of the network attachment node "Na" at attachment point 13, this end-to-end path 12 comprises an upstream portion 12a (extending from sender "S" 11 via one or more of routers 15 of network 10 to attachment point 13) and a downstream portion 12b (extending from attachment point 13 via one or more of routers 25 of network 20 and attachment point 17 to receiver "R" 19). It will be understood that packets travelling from sender "S" 11 to receiver "R" 19 need not all traverse the same path, and that the division between "upstream" and "downstream" on any path will depend on the entity from whose point of view the path is to be regarded. The following explanation would be applicable in relation to other more complex scenarios, but in the interests of clarity, this simple scenario will be used.

As the data centre network 10 forwards packets across the border with the access network 20, the access network monitors the re-ECN protocol fields in packets passing the attachment point 13. The function at the attachment point consists of a border monitor that measures the level of downstream congestion and some other function that acts on what it measures. It might limit the amount of downstream congestion that the data centre network can cause in the access network, as is discussed in International application WO2006/082443, and in reference [Jacquet08]. Alternatively, it might trigger various management actions, or it may send the measurements to an accounting system in order to levy charges.

Normally, the access network would count arriving Positive packets to measure downstream congestion. It might expect to see a few Negative packets due to congestion within the data centre, but probably not many. It would subtract the bytes in these few Negative packets from the count of bytes in Positive packets to calculate how much congestion remained on the rest of the path, rather than in the data centre.

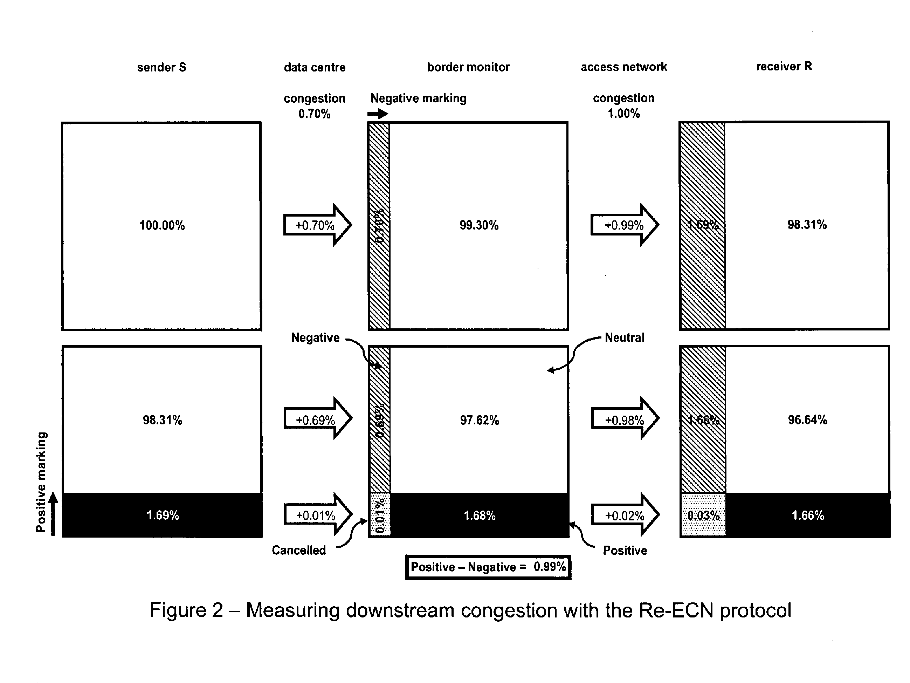

**Figure 2** represents a certain volume of transmitted data by the area of a square. The square is shown divided into areas horizontally to represent the proportions of packets marked by congested network elements (Negative) or not (Neutral). The square is also shown divided into areas vertically to represent the proportions of packets marked by the sender to expose whole-path congestion to the network (Positive) or not (Neutral).

Figure 2 shows a typical scenario, where there is 1.00% congestion in the access network and only 0.70% congestion in the data centre network. Therefore, when traffic arrives at the border of the access network (top centre square), 0.70% of packets will already have been flagged Negative by the data centre network, leaving 99.30% unmarked (Neutral).

The congestion marking algorithm in network equipment is deliberately designed so that packets can be marked randomly without regard to what marking any particular packet already has. Therefore, by the time packets reach receiver R, a further 1.00% of the Neutral packets will have been marked Negative, that is 1.00% of 99.30% = 0.99% more Negative packets added to the 0.70% already flagged Negative, which adds up to 1.69% Negative packets at the destination (all percentage figures are given accurate to two decimal places). These proportions of markings are illustrated graphically (but not to scale) in the top row of Figure 2.

The receiver R will send feedback to the sender that 1.69% of packets have arrived with the Negative "congestion experienced" (CE) flag set. Then, in compliance with the re-ECN protocol, the sender S will set the Positive flag on the same proportion (i.e. 1.69%) of packets (bottom left of Figure 2). As the mixture of Positive and non-Positive (Neutral) packets passes through the two networks, they will also be flagged Negative to indicate the congestion they experience. If, for the purposes of illustration, we assume that the congestion level remains stable, these packets will experience the same level of congestion in each network as before. Given that the Negative and Positive signals can be set independently, this will lead to the data centre network congestion marking 0.70% of the Neutral packets and 0.70% of the Positive packets. That will result in 0.70% of the 1.69% of packets that start out flagged Positive being flagged Negative as well. Thus about 0.01 % of packets will be marked both Positive <u>and</u> Negative. As already explained, such packets are termed Cancelled because the Positive marking that indicates whole path congestion is "cancelled-out" by the Negative marking that indicates upstream congestion on the same packet.

Of the other 98.31% of packets that start out unmarked (Neutral), 0.7% will be marked Negative, that is 0.69% of all packets arriving at the access network will be Negative. Given that 1.69% of packets were originally Positive and the data centre marks 0.01% Negative, that will leave 1.68% marked Positive on arrival at the access network.

The attachment point at the ingress to the access network can then subtract the proportion of Positive packets (1.68%) from the proportion of Negative packets (0.69%) to estimate that downstream congestion is (1.68% - 0.69%) = 0.99%, which is a reasonable estimate of the actual congestion downstream of this attachment point, which (it will be recalled) is 1.00%.

Although the data centre scenario of Figure 1 is used to illustrate vulnerabilities in the re-ECN protocol, of course, similar attacks could be mounted by any network (or other such entity) forwarding packets to any other network. The data centre network mounting the attacks could just as easily be a home network, a University network or one commercial network forwarding packets to another commercial peer.

Whatever the scenario, the markings on the packets will always be under the control of the upstream network until the packets are handed over at the attachment point between the networks. It will always be in an upstream network's interest (in relation to issues of congestion accountability at least) to try to make the measured level of downstream congestion appear as if it is less than in reality. A robust technique is required that can reliably measure congestion downstream of the attachment point and that can be verified to the satisfaction of both parties, even though the upstream network could have altered the packet markings beforehand.

Attack Strategy #1: Extreme Upstream Congestion

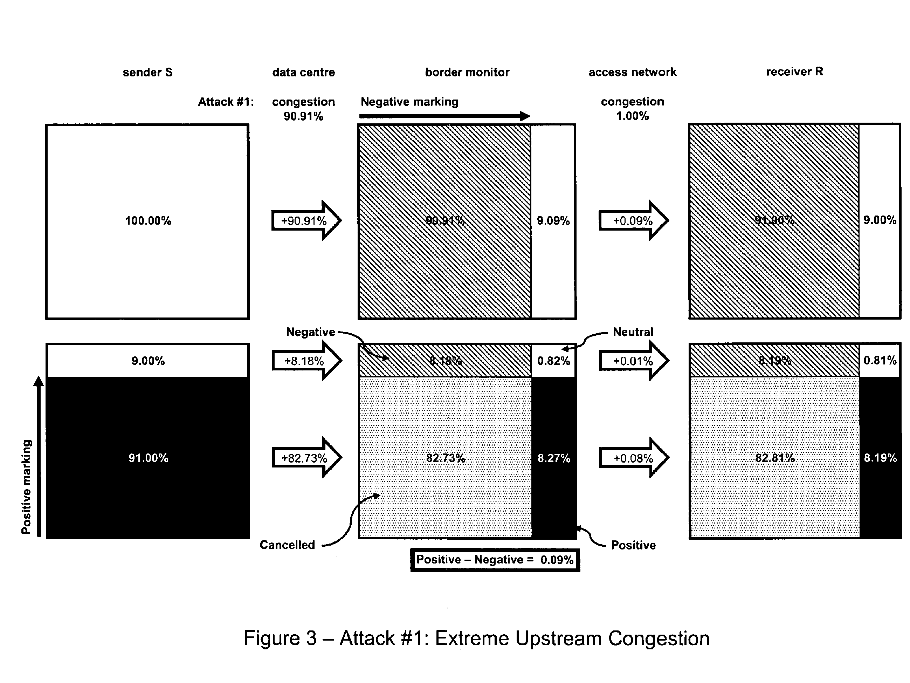

Returning to the example data centre scenario of Figure 1, if the data centre sets both Positive and Negative flags on nearly all packets, it seems to be able to pervert the access network's measurement of downstream congestion to its advantage. The following example illustrates the outcome of this strategy. Imagine there is still 1.00% congestion in the access network downstream of the data centre network. The data centre network can pretend that congestion is very high within the data centre, perhaps marking 90.91% of packets as Negative, as shown in **Figure 3.** Then when the access network marks 1.00% of packets Negative it will result in 91.00% Negative packets, because the data centre only leaves 9.09% of packets not Negative, which when marked by the access network with 1.00% probability will only add 0.09% Negative packets, resulting in 91.00% Negative packets.

The data centre can comply with the re-ECN protocol by flagging 91.00% of packets as Positive at the source, but also continuing to mark 90.91 % of packets Negative, which is unusual but not contrary to any protocol. Only the 9.00% of packets originally left unmarked (Neutral) can become Negative. Therefore, only 8.18% will be flagged Negative at the border with the access network. The much larger proportion (91.00%) of packets flagged Positive will result in a much larger proportion (82.73%) of packets Cancelled (i.e. flagged both Positive and Negative) arriving at the border with the access network, leaving only 8.27% still Positive.

Once these Positive packets pass through the 1% congestion-marking in the access network, 8.19% will be left Positive, which will correctly match the 8.19% proportion of packets that are Negative. Therefore the access network cannot complain that the traffic is non-compliant with the re-ECN protocol, because nowhere will there be insufficient Positive bytes relative to Negative.

However, when the access network subtracts Negative from Positive bytes as packets arrive from the data centre, it will measure downstream congestion as 8.27% - 8.18% = 0.09%.

Whereas the actual value should be 1.00%. Thus, by introducing a very high amount of (apparent) congestion in its own network and otherwise complying with the letter of the re-ECN protocol, the data centre has managed to make the access network think that data centre traffic is causing only 0.09% congestion in the access network, which is eleven time less than the 1.00% congestion it is actually causing.

Attack Strategy #2: Signal Poisoning with Both Markings

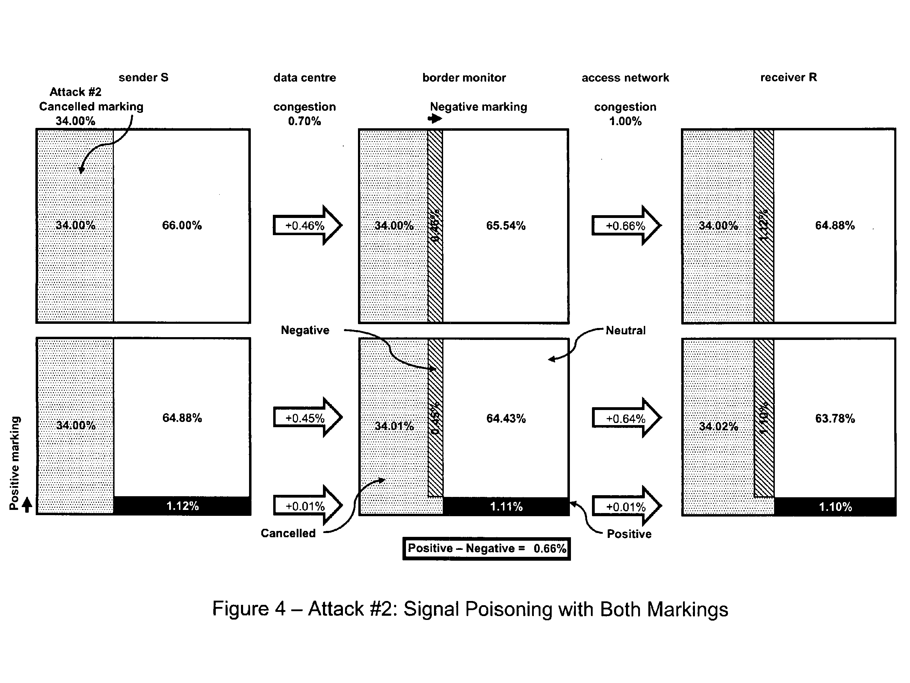

In a second strategy to pervert the access network's measurement of downstream congestion, the operator of the data centre network (10 in Figure 1) could use the re-ECN protocol as normal, but in addition arrange for the sender S to mark a high proportion of all packets as Cancelled (i.e. flagged both Positive and Negative). An example of this attack is shown in **Figure 4,** where the sender S starts by flagging 34.00% of packets as Cancelled.

The Positive flags on these packets do not contribute to any measurement of downstream congestion, because they are all Cancelled out by the Negative flags on the same packets. Also, these packets are immune to further congestion marking because they are already marked Negative. It can be seen from Figure 4 that the data centre operator can still apply the re-ECN protocol to the remaining 66.00% of packets. If the access network operator subtracts Negative from Positive markings in the packets it receives from the data centre network it will measure downstream congestion as 66.00% of its actual value, that is 0.66% rather than 1.00%. Thus the upstream network can reduce the level of congestion that the access network measures by effectively "poisoning" the re-ECN signal with Cancelled packets.

Attack Strategy #3: Switching Negative Markings

It has been proposed in [re-ECN.motivation] that a border monitor could negate attack strategy #2 when calculating downstream congestion by using the following formula to calculate downstream congestion:

$$\text{Downstream congestion} = \text{Cancelled bytes} + \text{Positive bytes} - \text{Negative bytes} \quad (1)$$

In other words, this approach counts bytes in Cancelled packets in addition to those solely marked Positive before subtracting bytes in packets marked Negative. Both strategies #1 and #2 introduce a large proportion of Cancelled packets, so counting these as Positive would appear to negate these attacks.

However, if the operator of the upstream network (e.g. the data centre network in Figure 1) suspects that the border monitor is using this approach, it can adopt a counter-strategy, termed attack strategy #3, that still reduces the apparent level of downstream congestion given by equation (1). The upstream network can guarantee to make downstream congestion appear lower if it switches Negative markings from Cancelled packets to unmarked (Neutral) packets. This approach ensures that traffic still complies with the re-feedback condition that there must not be more Negative than Positive traffic, because it increases the proportion of Positive packets and the proportion of Negative packets by the same amount.

If a downstream network includes Cancelled packets in its calculation of downstream congestion, it is advantageous to an upstream network to reduce the proportion of Cancelled packets, whereas attack #2 showed that when the downstream network does not include Cancelled packets in its calculations it is advantageous for the upstream network to increase the proportion of Cancelled packets.

In typical circumstances where low levels of congestion prevail the proportion of Cancelled packets will be very small. For instance, it would be unusual for congestion to be higher than in the scenario of Figure 2 where total congestion is 1.69%, and in that case only 0.01% of packets end up as Cancelled. Therefore, given attack strategy #3 consumes Cancelled packets, this attack only seems able to achieve a very small reduction in downstream congestion. However, attack strategy #3 can be combined with strategy #1, to greatly reduce apparent downstream congestion - by up to half of its actual value. Strategy #1 greatly increases the proportion of Cancelled packets, giving plenty to switch from Cancelled to Neutral using strategy #3.

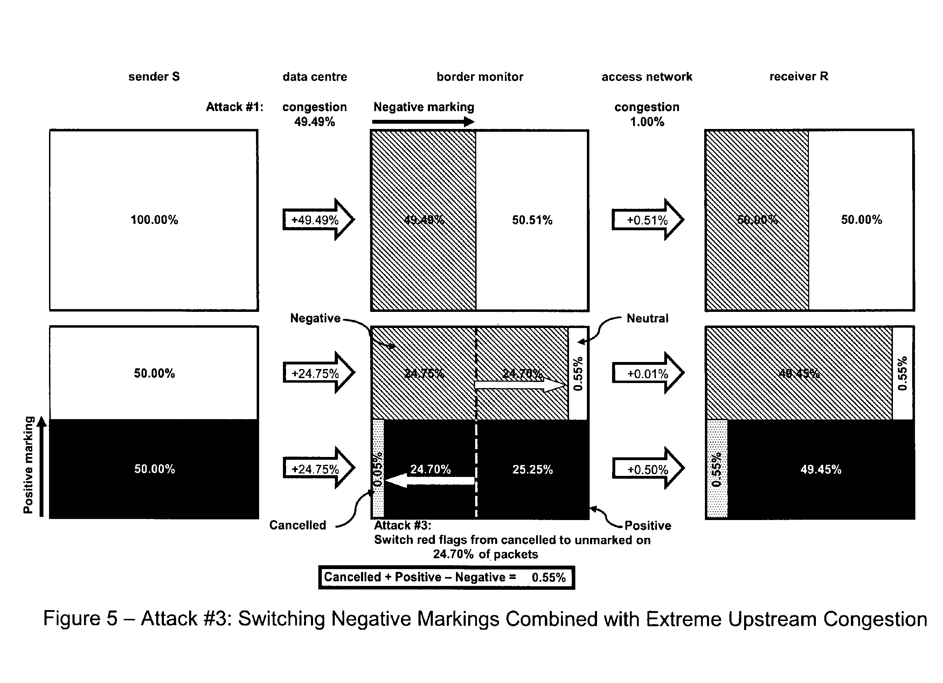

**Figure 5** illustrates a numerical example of this combined attack. First (top centre), the data centre applies strategy #1, faking a high 49.49% level of congestion, which results in 50.00% Negative markings (top right) once it has also passed through congestion in the access network, which is still 1.00% as in previous examples.

The sender S initially complies with the re-ECN protocol by marking 50.00% of packets Positive (bottom left). Once all the sender's packets have been subjected to the same 49.49% fake congestion, the proportions marked Cancelled and Negative will both be about 24.75% (percentages accurate to 2 decimal places). Then the data centre network applies strategy #3; it switches the Negative markings from most of the Cancelled packets onto an equal amount of unmarked (Neutral) traffic. In Figure 5 (bottom centre) it has chosen to switch 24.70% of packets, so the proportion of Positive packets and Negative packets increases by 24.70%.

When the access network uses equation (1), the data centre network has successfully fooled it into calculating that downstream congestion is 0.55% rather than 1.00%, a reduction by nearly one half. These combined attacks still comply with the constraint of the re-feedback protocol that there must be no more Negative packets than Positive, because it can be seen in Figure 5 (bottom right) that Negative and Positive packets end up equal as required.

References

[re-feedback]: Briscoe, B., Jacquet, A., Cairano-Gilfedder, C.D., Salvatori, A., Soppera, A. & Koyabe, M.: "Policing Congestion Response in an Internetwork Using Re-Feedback", Proc. ACM SIGCOMM'05, Computer Communication Review 35(4): 277-288 ACM Press (Aug 2005).

[RFC3168]: Ramakrishnan, K.K., Floyd, S. & Black, D.: "The Addition of Explicit Congestion Notification (ECN) to IP", Internet Engineering Task Force Request for comments 3168 (September 2001).

[RED]: S. Floyd & V. Jacobson: "Random Early Detection gateways for Congestion Avoidance", IEEE/ACM Transactions on Networking, Vol 1-4 (397-413) Aug 1993.

[re-ECN]: B. Briscoe, A. Jacquet, T. Moncaster, A. Smith: "Re-ECN: Adding Accountability for Causing Congestion to TCP/IP", IETF Internet Draft draft-briscoe-tsvwg-re-ecn-tcp-09 (Oct 2010).

[re-ECN-motive]: B. Briscoe, A. Jacquet, T. Moncaster, A. Smith: "Re-ECN: A Framework for Adding Congestion Accountability to TCP/IP", IETF Internet Draft draft-briscoe-tsvwg-re-ecn-tcp-motivation-02 (Oct 2010).

[RFC791] Postel (Ed.), J.: "Internet Protocol", Internet Engineering Task Force STD 5, RFC 791 (September 1981).

[conex-mech]: M. Mathis & B. Briscoe: "Congestion Exposure (ConEx) Concepts and Abstract Mechanism", IETF Internet Draft draft-ieff-conex-abstract-mech-01 (Mar 2011).

[Jacquet08]: Jacquet, A., Briscoe, B. & Moncaster, T.: "Policing Freedom to Use the Internet Resource Pool", In: Proc Workshop on Re-Architecting the Internet (ReArch'08) ACM (December 2008).

Discussion of Prior Disclosure(s):

International application WO2006/079845 (referred to above) describes how two separate signals can be encoded into a sequence of packets, each using a unary encoding to represent respectively whole-path congestion and upstream congestion. Then expected downstream congestion can be measured by counting the size of those packets marked with the first signal and subtracting the size of those marked with the second signal. It does not mention the vulnerability of this approach to the attacks described earlier.

Appendix C.1 of [re-ECN.motivation] entitled "C.1. Bulk Downstream Congestion Metering Algorithm" gives the pseudocode of the above trivially simple subtraction algorithm that implements measurement of the volume of downstream congestion.

Appendix A of [re-ECN] entitled "Precise Re-ECN Protocol Operation" derives the precise congestion marking that will result from multiple congested queues on a network path, which a sender complying with the re-feedback protocol will then re-insert into the network. It then derives a formula for the precise congestion downstream of a measurement point between two networks in terms of the signals measurable locally at that point. In a final step, it shows that the difference between whole path and upstream congestion signals is a reasonable approximation of congestion downstream of this point. No mechanism is proposed to implement the precise formula and no reason is given for why such a mechanism would be needed. It is merely used as a step in the analysis to reach the approximation, which is recommended for use because it is easy to implement.

The present inventor has identified that vulnerabilities of re-ECN encoding seem to stem at least partly from the need for the encodings of the two signals to be independent. This means that it has to be possible to mark or not mark a packet to encode whole-path congestion and it has to be separately possible to mark or not mark a packet to encode congestion on the path so far. Therefore it has to be possible for one packet to be marked both Positive and Negative, which seems to make the protocol vulnerable to the above attacks.

A previous variant of the re-feedback protocol that lacked independence between the two signals was proposed in section 4.1 of [re-feedback]. However, this lack of independence between the signals became the cause of increasing complexity. It was also found to introduce a different security flaw, where networks could undetectably alter the signal sent by the source (see Appendix B of [re-ECN]).

Therefore the re-ECN protocol was updated to make room for two independent signals. During normal operation of the updated protocol, intermediate network nodes are expected to solely exercise control of the congestion experienced (Negative) flag while the source is expected to solely exercise control of the re-echoed congestion (Positive) flag. However, there seems to be nothing to stop the sender (or an upstream network) adding or removing Cancelled packets.

Section 4.4 of [re-ECN.motivation] entitled "Ingress Policing" describes the attack that poisons the re-ECN signal with Cancelled packets (Attack Strategy #2 above). In the same document [re-ECN.motivation], Appendix B.1 entitled "Per-user Policing" proposes a way to negate this attack. It suggests that, when a policer calculates downstream congestion, it should add a count of bytes in Cancelled packets to the count of bytes in Positive packets. However, subsequent (unpublished) analysis by the present author has shown that this approach is not robust - it merely opens up a vulnerability to a different attack (strategy #3 described above).

The final paragraph of Appendix B of [re-ECN] entitled "Justification for Two Codepoints Signifying Zero Worth Packets" says:

*"Finally, a little redundancy can be very powerful in a scheme such as this. In one flow, the proportion of packets changed to CE should be the same as the proportion of RECT packets changed to CE(-1) and the proportion of Re-Echo packets changed to CE(0). Double checking using such redundant relationships can improve the security of a scheme (cf. double-entry book-keeping or the ECN Nonce). Alternatively, it might be necessary to exploit the redundancy in the future to encode an extra information channel."*

A form of this redundancy is used in the less preferred solution discussed below.

**Summary of the Invention**

According to a first aspect of the present invention, there is provided a method of determining a measure indicative of downstream path congestion in respect of a node via which a plurality of data units are traversing an end-to-end path from a sender to a receiver, each said data unit having:

- a first indication settable in dependence on information from the receiver to each of at least two states whereby to indicate whether or not respective data units previously received by the receiver experienced congestion on the end-to-end path;
- a second indication settable to each of at least two states whereby to indicate whether or not said data unit has experienced congestion on the path from the sender;

the first and second indications in respect of a particular data unit being settable independent of one another;
the method comprising:

receiving a plurality of data units at said node; and
determining said downstream path congestion measure in dependence on respective counts of the number of said data units having predetermined combinations of first and second indications, and in dependence on an inflation factor count indicating the proportion of data units received at said node whose second indication is still capable of being set to indicate that the data unit has experienced congestion on the path from the sender.

According to a second aspect of the present invention, there is provided apparatus for performing a method according to the first aspect.

Various options and preferred embodiments referred to in relation to the first aspect are also applicable in relation to the second aspect.

Algorithms implementing preferred embodiments may be thought of as having two functional components not present (in combination) in prior art techniques. These are as follows:

Algorithm Component A: A value for downstream congestion is calculated as a fraction. The value of this fraction depends on the proportions of traffic volume with certain markings. Then the algorithm selects this fraction from all packets with a re-feedback marking, irrespective of their specific marking.

A count of the sizes of the selected packets or selected fractions of packets then represents the volume of downstream congestion. Or the bit-rate of selected packets represents the instantaneous downstream congestion rate.

Algorithm Component B: The fraction of re-feedback packets to be selected is inflated relative to the fraction that would be found by taking the proportion of re-feedback packets that are Positive and subtracting the proportion of re-feedback packets that are Negative.

The inflation factor used is the volume of all re-feedback packets relative to the volume of only those re-feedback packets that are still capable of being congestion-marked. This inflation factor may be 1 or greater than 1, but it cannot be less than 1.

Thus, if proportion m of re-feedback packets is already congestion-marked, the calculated fractional value will be inflated by *1/(1-m)* relative to the fraction of all re-feedback packets.

Using the intermediate fractional value to select from all re-feedback packets (Algorithm Component A) makes this approach robust to attacks where those packets not measured to calculate the fraction are not in the expected proportions relative to those packets that are measured.

Algorithm Component B ensures that a measurement of downstream congestion cannot be perverted even if a large proportion of packets is congestion-marked upstream.

Mathematically, prior disclosures implemented the following formula for downstream congestion rate:

$$v \approx z - u, \qquad (2)$$

whereas preferred embodiments of the invention implement the following formula for downstream congestion rate:

$$v = x\,(z - u)\,/\,(z + y) \qquad (3)$$

where:

x is the bit-rate of all re-feedback-enabled traffic (Neutral, Positive, Negative & Cancelled)
y is the bit-rate of unmarked packets (Neutral)
u is the bit-rate of packets marked with congestion but not re-echoed congestion (Negative)
z is the bit-rate of packets marked with re-echoed congestion but not congestion (Positive)

Alternatively, the new formula can be expressed in a form which has been found to be amenable to very simple implementation:

$$v = x\,(1 - (u+y)\,/\,(z+y))$$
$$= x\,(1 - n\,/\,e), \qquad (4)$$

where

n is the bit-rate of packets that are not marked with re-echoed congestion (no Positive flag)
e is the bit-rate of packets that are not marked with congestion (no Negative flag)

It will be noted that the above differs from prior art techniques in at least the following two respects:

- Multiplication by x, which would not be necessary if the other variables were correctly in proportion to the rest of the traffic.

- Division by e, which makes the formula precise rather than approximate, making it robust to high levels of congestion that otherwise invalidate the approximation used in the prior art.

It will be understood that this is <u>not</u> equivalent to techniques involving obtaining a measurement from a randomly-chosen sample or sub-set of all traffic, then scaling the measurement up pro-rata in order to obtain an estimated measurement in respect of all traffic. Such techniques firstly rely on the sub-set being representative of the whole - if they are not, and the measurement made is therefore skewed, the error will simply be magnified once the measurement is scaled-up. Second, such techniques require actual measurement of the characteristic in question, which is not equivalent to simply counting the number of packets with specific types of markings (and is generally more computationally-intensive).

This solution is applicable more generally than in the specific scenario described:

- It applies whether the re-feedback protocol is used in Internet Protocol packets or the packets or frames of a different network protocol.
- It applies whether the signal encoded in the packets represents congestion or some other characteristic of the path through the network.
- It applies if a more comprehensive encoding is used (e.g. as in [conex.mech]) where any of the four main types of marking listed above may be encoded by more than one value.
- It applies if the above formula is transformed into other equivalent forms that are functions of a different subset of the possible packet markings
- It applies whatever action is taken as a result of the determination of downstream congestion. For instance, the measure determined may be used for policing traffic to a contract, to trigger management action such as an alarm indicating that downstream congestion levels have exceeded a threshold, or to be accounted for as part of a contractual arrangement between a network operator and a client.
- It applies whether the traffic passing from one network to another traverses a single path, or multiple paths potentially at multiple locations (this is discussed in International application WO2011/045553)
- It applies whether the measurements are taken local to the attachment point or remote from it, perhaps using header encapsulation to convey the metrics from the point of attachment to the point of measurement (this is discussed further in co-pending European application EP10251106, unpublished at the priority date of the present application)
- It applies whether or not the integrity of the re-feedback protocol is currently being audited by a truth policer such as that disclosed in WO2005/109783. Note, however, that robust security of the re-feedback protocol generally requires both the present normalisation technique and an audit function. The distinction here is that normalisation and audit run independently, but the integrity of the protocol depends on both of them operating.
- It applies whether the re-feedback signals are generated by the source or by a proxy (see International application WO2010/106311 and co-pending European application EP10250693.8, unpublished at the priority date of the present application for more information on use of proxies in relation to re-feedback).

The solution is generally applicable to re-feedback if using a superimposed encoding such as that disclosed in WO2006/079845 (an aim of which was to facilitate incremental deployment within existing Internet and networking practices).

## Brief Description of the Drawings

A preferred embodiment of the present invention will now be described with reference to the appended drawings, in which:

**Figure 1** shows a schematic diagram of a typical network;

**Figure 2** shows how downstream congestion may be measured with the Re-ECN protocol;

**Figure 3** illustrates how a network (or other entity) upstream of a network measuring downstream congestion using the Re-ECN protocol may attempt to pervert such measurements. This is referred to as "Attack #1: Extreme Upstream Congestion" above;

**Figure 4** illustrates "Attack #2: Signal Poisoning with Both Markings", also discussed above;

**Figure 5** illustrates "Attack #3: Switching Negative Markings Combined with Extreme Upstream Congestion", also discussed above; and

**Figure 6** shows a process for measuring downstream congestion from superimposed encodings according to a preferred embodiment of the invention.

## Description of Preferred Embodiments of the Invention

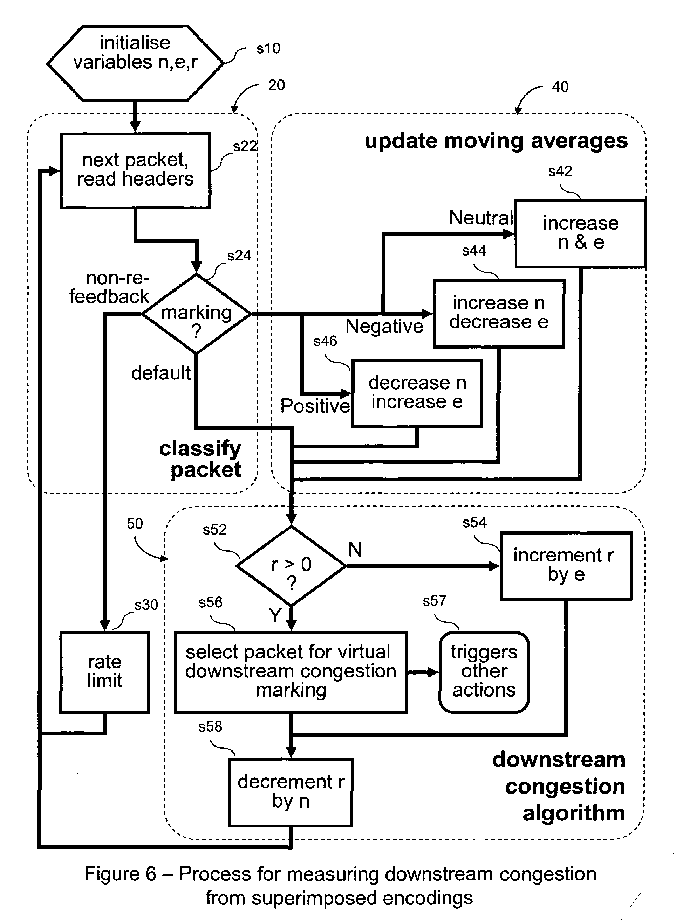

With reference in particular to **Figure 6,** a method according to a preferred embodiment will now be described. In this method, packets are selected from a stream of packets passing a monitoring point (e.g. attachment point 13). If the selected packets are considered to be flagged with a virtual marking, then the bytes in the virtually marked packets encode how much congestion downstream of the point of measurement the stream of packets contributes.

Once downstream congestion is (virtually) encoded into the stream of packets by these virtual marks, the encoding may be used for a range of purposes, for instance:

(i) The size in bytes of each virtually marked packet may be drained from a token bucket that is filled with tokens at a rate that represents the contracted rate at which congestion may be caused downstream by the network sending the stream of packets. Then, whenever the bucket empties, it may prevent traffic from proceeding on the basis that the contracted congestion rate and burst size has been exceeded (see WO2006/082443, Jacquet08] for details).

(ii) The size in bytes of the virtually marked packets may be added to an account of the amount of downstream congestion contributed to by the party sending (or receiving) the packets.

(iii) The bit-rate of packets with virtual markings may be monitored, and if it exceeds a threshold it may trigger management actions to alleviate the congestion or to take further action to establish the cause of the anomaly.

Measurements of downstream congestion-volume may be used for many other purposes not explicitly listed here, just as measurements of data volume or data bit-rate may be used for a wide range of purposes.

In a preferred embodiment of the invention, the process for selecting packets from a stream so that the size of the selected packets encodes downstream congestion consists of the three main steps, shown as large dashed boxes in Figure 6:

(i) Classify packet: by its markings (box 20)

(ii) Update moving averages: depending on packet classification (box 40)

(iii) Downstream congestion algorithm: that decides whether to select a packet dependent on the moving averages but not on the classification of the packet (box 50).

This algorithm is particularly preferred because, after the packet has been classified, it only requires two or three single cycle operations of a typical general purpose processor to update the moving averages and a further two cycles per packet to run the downstream congestion algorithm. Therefore this preferred algorithm requires only five or six cycles per packet to reach the point where it can select packets to be considered as virtually marked.

The process illustrated in Figure 6 is also described using pseudocode as follows:

```
1 /* Downstream congestion meter */
2 /* Assuming re-ECN encoding in draft-briscoe-re-ecn-tcp-09 */
3 meterDownCong() {
4 /* Initialise variables */
5 V = 0 /* downstream congestion-volume*/
6 n = 0 /* recent never-positive markings (NEUT or NEGV)*/
7 e = 0 /* recent ECT markings (NEUT or POSV or CAUT)*/
8 r = 0 /* remainder */
9 a = EWMA_WEIGHT
10 foreach packet {
11 s = readLength(packet)
12 eecn = readEECN(packet)
13 if (eecn != (ECT(0)
14 || Not-ECT)) {
15 /* A re-ECN enabled packet */
16 /* Update moving averages dependent on pkt marking */
17 switch(eecn) {
```

```
18 case (NEUT | | CU):
19 n += (s-n)*a
20 e += (s-e)*a
21 case (POSV | | CAUT):
22 e += (s-e)*a
23 n —= n*a
24 case (NEGV):
25 n += (s-n)*a
26 e —= e*a
27 }
28 if (r > 0) { /* Select (1-n/e) re-ECN enabled packets */
29 V += s /* Virtual downstream congestion mark */
30 } else {
31 r += e
32 }
33 r —= n
34 } else {
35 /* Not a re-ECN packet */
36 /* Action depends on policy, e.g. rate limit */
37 }
38 }
39 }
```

Pseudocode 1: Monitoring Downstream Congestion from Superimposed Encodings

The above pseudocode maps to the flow diagram in Figure 6 as follows:

- Initialise all the variables (step s10): lines 5 to 9
- Read the next packet and classify it, reading relevant header fields (step s22), in particular the extended ECN field (EECN) to determine the re-ECN marking (step s24): lines 10-12
- Depending on the packet classification, the code updates moving averages of the relative rates of traffic with the different re-ECN markings (steps s42, s44, s46): lines 13-27
- The core downstream congestion algorithm (steps s52, s54, s56, s57, s58): lines 28-33
- Lines 34-36 are a placeholder for the action to be taken on traffic that chooses not to use the re-feedback protocol. For instance, such traffic may be rate-limited (step s30).

The core algorithm in lines 28-33 uses an internal variable r to select a proportion of packets that pass the test "*if (r > 0)*" (step s52). Those packets that pass the test (step s56) can be considered as if they are given a virtual mark denoting downstream congestion. This example algorithm is being used to calculate congestion-volume, therefore in line 29 the size of those packets given a virtual mark is added to the count of congestion volume. If the algorithm were being used to trigger some other action (step s57) dependent on the level of downstream congestion, that action would be invoked instead at this point in the code.

The core algorithm works as follows. For the purpose of explanation only, consider a case with stable values of n and e. Imagine sufficient rounds of the "foreach packet" loop for the variable r to return to a value it held earlier, during which the algorithm respectively passes and fails the "(r > 0)" test a times and b times. Each of the a times that the test passes, r is decremented by *n* and each of the b times that it fails r is both decremented by n and incremented by e. Therefore:

$$-an + b(e - n) = 0 \quad \text{or} \quad b = an / (e - n).$$

Downstream congestion b is the volume of packets that the algorithm selects as a proportion of the volume of all the packets it puts through the "(r > 0)" test. A packet is selected every time the test passes, therefore downstream congestion is the number of tests that pass as a proportion of all tests, whether pass or fail:

$$v = a / (a + b).$$

Note that, because the algorithm selects from re-ECN capable packets randomly, packets can be selected without paying attention to their size. Substituting for b from above,

$$v = a \, / \, (a + an \, / \, (e - n))$$

$$= 1 \, / \, (1 + n \, / \, (e - n))$$

$$= (e - n) \, / \, e$$

$$= 1 - n \, / \, e,$$

which is indeed the fraction of all re-ECN packets that was required to be selected in equation (4) earlier.

Algorithm Component A described earlier is instantiated at line 28, where packets with any re-feedback marking are presented as candidates for selection by the downstream congestion algorithm, not just packets with specific re-feedback markings. This functionality results from the structure of this algorithm component as a whole so is not confined to this single line of code, but line 28 is the salient point in the structure. It can better be seen in Figure 6 where the flow of control converges into the "*r>0*" test (step s52) for all re-feedback packets of whatever marking.

Algorithm Component B described earlier is instantiated at line 31, where whenever a packet is not selected the remainder variable r is decremented by e, the proportion of bytes still capable of being congestion-marked. This repeated subtraction whenever a packet is not selected effectively inflates the probability of selecting packets by the ratio between the volume of re-feedback packets and the volume of those packets still capable of being congestion-marked (just as repeated addition is equivalent to multiplication, repeated subtraction is equivalent to division). Again, the functionality results from the structure of this algorithm component as a whole, and is not confined to this single line of code; line 31 is where the variable e is finally used, but earlier lines of code initialise and maintain its value so that it can be used.

The pseudocode that maintains the moving averages of the volumes of different markings is only one of many techniques which may be used to implement embodiments of the invention. The following explanation is intended to assist the reader in understanding its importance.

An exponentially weighted moving average (EWMA) is an accurate averaging technique that can be very efficiently implemented. It is known [RED] that an EWMA can be implemented on a binary computer using only three processor cycles and no multiplication or division for each update of the average, as long as a value of the weight 'a' is chosen that is a negative integer power of 2, i.e. $a = 2^{-j}$, where j is an integer ($0 < a \leq 1$). For instance the weight 'a' might be chosen to be 1/32 or 1/2. A smaller weight makes the moving average smoother but slower to respond to changes in the sequence of values being averaged.

The EWMA of any varying value $\mu$ can be maintained by the following well-known algorithm:

$$\overline{\mu}_i \leftarrow a\mu + (1-a)\overline{\mu}_{i-1}$$

where the next $i^{th}$ value of the moving average $\overline{\mu}_i$ is derived by taking the weighted average of the current value of the variable $\mu$ and the current $(i-1)^{th}$ value of the average. The formula can be rearranged as

$$\overline{\mu}_i \leftarrow \overline{\mu}_{i-1} + a(\mu - \overline{\mu}_{i-1})$$

In Pseudocode 1 (above), two EWMAs are maintained, n and e. Respectively they represent the recent rate of Neutral or Negative bytes and of Neutral or Positive bytes, both as a proportion of the rate of all three markings. It doesn't matter what they are expressed as a proportion of, as long as they are both expressed as a proportion of the same thing. This is because the values of n and e are only used relative to each other. Both EWMAs always clock on the same events (Neutral, Positive and Negative packets) to ensure that this remains so.

For the example to maintain the EWMA *n,* the number of bytes to average is either the packet size s when a packet is Neutral or Negative or 0 when it is Positive, therefore the code to run is:

- for a Neutral or Negative packet: n = n + a*(s-n)
- for a Positive packet: n = n + a*(0-n)

This explains lines 19, 23 and 25 of Pseudocode 1.

The above two lines can be implemented with the following code written in the C programming language:

$$n \mathrel{+}= (s-n) \mathbin{>>} j$$

$$n \mathrel{-}= n \mathbin{>>} j,$$

where j was defined above and >> is the right bit shift operator. The first line takes only three processor cycles and the second takes only two.

In an alternative second embodiment, the relative rates of traffic with each re-ECN marking can be updated without a moving average. This is equivalent to setting the weight a of the exponentially weighted moving average formula to 1. Then lines 17 to 27 of Pseudocode 1 above could be replaced with the following extract of pseudocode.

```
17 switch(eecn) {
18 case (NEUT || CU):
19 n = s
20 e = s
21 case (POSV || CAUT):
22 e = s
23 n = 0
24 case (NEGV):
25 n = s
26 e = 0
27 }
```

However, although this embodiment reduces the required processor cycles, it may also make it easier for an attacker to manipulate the order of packet markings to his advantage. This is therefore a less-than-preferred embodiment.

In an alternative third embodiment, the relative rates n and e of traffic respectively without a Positive flag and without a Negative flag can be calculated as the reciprocal of the number of bytes since the last packet of the same marking. For instance, if n is the moving average of packets that are non-Positive (Negative and Neutral), then *n'* can be defined as the number of bytes since the last non-Positive packet. Similarly, e' can be defined as the gap since the last non-Negative (Positive, Cautious or Neutral) packet. Then, the same algorithm for downstream congestion can be used, except replacing n with e' and e with n', because downstream congestion,

$$v = 1 - e'/n'.$$

In an alternative fourth embodiment, the algorithm does not select whole packets, instead it selects bytes from packets to be considered virtually marked.

```
28 if (r > 0) { /* Select (1-n/e) re-ECN enabled packets */
29 V += s /* Virtual downstream congestion mark */
30 r +=
30 } else {
31 r += e
32 }
33 r —= n
34 } else {
```

In an alternative fifth embodiment, the algorithm does not directly use an inflation factor that is "*... the volume of all re-feedback packets relative to the volume of only those re-feedback packets that are still capable of being con-*

*gestion-marked...*" (quoted from the explanation of Algorithm Component B of the preferred embodiment discussed earlier). Instead, the two markings that are still capable of being congestion-marked (Neutral and Positive) are each used separately as an inflation factor, and the maximum of the two results is used. If the upstream network is not cheating, the two results should give the same correct answer. Whereas if it is trying to cheat, it can only reduce one inflation factor and the other will always necessarily increase. Therefore taking the maximum of both inflation factors removes any advantage from cheating. It then becomes in the upstream network's interest not to cheat if it wishes to minimise the amount of congestion it appears to be causing.

The mathematical basis of this fifth embodiment will now be derived, after recapping and extending the notation used for equation (3) above:

- x is the bit-rate of all re-feedback-enabled traffic (Neutral, Positive, Negative and Cancelled)
- y is the bit-rate of unmarked packets (Neutral)
- u is the bit-rate of packets marked with congestion but not re-echoed congestion (Negative)
- z is the bit-rate of packets marked with re-echoed congestion but not congestion (Positive)
- c is the bit-rate of packets marked with re-echoed congestion and congestion (Cancelled).

From equation (3), downstream congestion rate:

$$v = x\ (z - u)\ /\ (z + y)\quad(3)$$

It can be seen in Figure 2 that the bottom centre square is divided into four areas. The inflation factor

$$x\ /\ (z + y)$$

used in equation (3) is the ratio of the area of the whole square x to the area of the two right-hand parts (z + y). If the square is now imagined to be cut down to the height of the lower two parts, it can be seen by proportionality that this is the same ratio as the area of the bottom two parts (c+z) to the bottom right part z. Therefore, if the re-ECN protocol is being adhered to, by proportionality:

$$x\ /\ (z + y)\quad = (c + z)\ /\ z.\quad(5)$$

Similarly, for the top two parts of the square, again by proportionality:

$$x\ /\ (z + y)\quad = (u + y)\ /\ y.\quad(6)$$

An upstream network trying to pervert downstream congestion measurement can vary the proportions of markings in traffic, but if the downstream network deploys a function to audit that the amount of Positive bytes is always no less than the amount of Negative bytes, the upstream network does not have complete freedom. Given such an auditing constraint, it can be shown that decreasing the inflation factor in equation (5) increases that in (6) and vice versa. Therefore, if measurements use the maximum of both factors, the lowest inflation factor will result if both factors are equal and therefore correct. Given it is in the upstream network's interest to reduce the measurement of downstream congestion, its best choice will then be to not cheat and to use the correct markings.

Therefore, the downstream network should measure downstream congestion with the following formula:

$$v = max(\ (z - u)(c + z)\ /\ z\ ,\quad (z - u)(u + y)\ /\ y\ )\quad(7)$$

Below we give a pseudocode algorithm that can output the result of the left-hand half of equation (7). The code outputs the integral of downstream congestion-volume. It is similar to the Pseudocode 1 above in that it only uses single-cycle machine instructions (adds, subtracts, comparisons & bit-shifts) in order to minimise processing cost. Developing a similar algorithm for the right-hand half of Equation (7) would be a similar task.

The algorithm below exploits a simple trick. Rather than inflating $(z - u)$ by $(c + z)/z$, it deflates $(c + z)$ by $(1 - u/z)$, because $(z - u)(c + z)/z = (1 - u/z)(c + z)$.

This embodiment does not involve quite the same split into Algorithm Components A and B as previous embodiments, but its overall effect is very similar when combined with the other half of equation (7). Quoting from the earlier description of Algorithm Component A, the first two sentences are true of the present embodiment, i.e.: *"A value for downstream congestion is calculated as a fraction. The value of this fraction depends on the proportions of traffic volume with certain markings."*. The third sentence would however need to be modified slightly from: *"Then the algorithm selects this fraction from all packets with a re-feedback marking, irrespective of their specific marking."* to *"Then the algorithm selects this fraction from all packets with specific re-feedback markings, which are not necessarily the same ones as those used to calculate the fraction."* in order to describe the present embodiment.

```
1 /* Downstream congestion meter */
2 meterDownCong() {
3 /* Initialise variables */
4 V = 0 /* downstr congestion-volume*/
5 z = 0 /* recent Positive markings */
6 u = 0 /* recent Negative markings */
7 r = 0 /* remainder */
8 a = EWMA_WEIGHT
9 foreach packet {
10 s = readLength(packet)
11 eecn = readEECN(packet)
12 if (eecn != (ECT(0)
13 || Not-ECT)) {
14 /* A re-ECN enabled packet */
15 /* Update moving averages dependent on pkt marking */
16 switch(eecn) {
17 case NEGV:
18 u + = (s-u)*a
19 z —= z*a
20 case (POSV || CAUT):
21 z += (s-z)*a
22 u —= u*a
23 }
24 if (eecn == (POSV
25 || CANC)) {
26 if (r < z) {
27 /* 1-u/z CANC or POSV
28 pkts reach here */
29 V += s
```

Pseudocode 2: Monitoring Downstream Congestion from Superimposed Encodings

The algorithm works broadly as that of Pseudocode 1. The assignments within the (switch (eecn) ) logic maintain two moving averages for recent Positive and Negative markings, z & u respectively, depending on whether the packet's extended ECN marking is Positive or Negative. As before, the values are meaningless other than relative to each other. Both EWMAs clock on the same events (a Positive or Negative mark) to ensure this is so.

The part that calculates $(1 - u/z)(z + c)$ without division or multiplication is in the last two nested "if" statements (lines 24-34). Whenever a Positive or Cancelled packet arrives, it is a candidate for counting towards downstream congestion (the $(z + c)$ term). The remainder variable r increments by $u$ each time such a candidate appears and also decrements by z whenever it has climbed to be greater than z. Therefore, r will climb for $(1-u/z)$ of the candidates and saw-tooth down every $(u/z)$ of the candidates. It adds all the candidate packets except those picked by the downward saw-tooth to its running total of downstream congestion-volume, so it selects $(1-u/z)$ of the Positive or Cancelled packets to add.

An alternative sixth embodiment is similar to the previous fifth embodiment except, rather than taking the maximum of two formulae, one or the other algorithm is chosen randomly (or the choice of algorithm may be varied between the two in a manner that an attacker cannot predict or determine). Then if an attacker cheats, sometimes it will be better-off and sometimes worse-off. Overall it can be shown that an attacker will be better off not cheating if it cannot predict which formula will be used for any particular packet. The random choice between the two formulae may be made on a packet-by-packet basis, or one formula may be used for a random duration when it switches to the other.

**Claims**

1. A method of determining a measure indicative of downstream path congestion in respect of a node via which a plurality of data units are traversing an end-to-end path from a sender to a receiver, each said data unit having:

   - a first indication settable in dependence on information from the receiver to each of at least two states whereby to indicate whether or not respective data units previously received by the receiver experienced congestion on the end-to-end path; and
   - a second indication settable to each of at least two states whereby to indicate whether or not said data unit has experienced congestion on the path from the sender;

   the first and second indications in respect of a particular data unit being settable independent of one another;
   the method comprising:

   receiving a plurality of data units at said node; and
   determining said downstream path congestion measure in dependence on respective counts of the number of said data units having predetermined combinations of first and second indications, and in dependence on an inflation factor count indicating the proportion of data units received at said node whose second indication is still capable of being set to indicate that the data unit has experienced congestion on the path from the sender.

2. A method according to claim 1 wherein the determination is performed according to an algorithm using respective counts such that the downstream path congestion measure so-determined is substantially independent of the number of and/or proportion of data units having their first indication set to indicate that respective data units previously received by the receiver did experience congestion on the end-to-end path and their second indication set to indicate that said data unit has experienced congestion on the path from the sender.

3. A method according to claim 1 or 2 wherein said measure of downstream path congestion is determined in dependence on:

   - a first measure representing the bit-rate of data units whose first indications indicate that respective data units previously received by the receiver did not experience congestion on the end-to-end path; and
   - a second measure representing the bit-rate of data units whose second indications indicate that said data units have not experienced congestion on the path from the sender.

4. A method according to any of the preceding claims wherein the inflation factor count is determined either:

   (i) from a count indicating the proportion of data units received at said node whose first indication indicates that respective data units previously received by the receiver experienced congestion on the end-to-end path and whose second indication is still capable of being set to indicate that the data unit has experienced congestion on the path from the sender; or
   (ii) from a count indicating the proportion of data units received at said node whose first indication indicates that respective data units previously received by the receiver did not experience congestion on the end-to-end path and whose second indication is still capable of being set to indicate that the data unit has experienced congestion on the path from the sender.

5. A method according to claim 4 wherein the method comprises determining the measure of downstream path congestion according to whichever of the counts set out in (i) and (ii) provides a measure indicative of a higher amount of downstream path congestion.

6. A method according to claim 4 or 5 wherein the method further comprises determining an alternative measure of downstream path congestion according to whichever of the counts set out in (i) and (ii) provides a measure indicative of a lower amount of downstream path congestion, whereby to enable the measure of downstream path congestion indicative of a higher amount of downstream path congestion to be used.

7. A method according to any of the preceding claims wherein at least one of the respective counts of the number of data units having predetermined combinations of first and second indications is independent of the state to which one of said first and second indications has been set.

8. Apparatus for performing a method according to any of the preceding claims.

## Key to Schematic:

Figure 1 - Schematic of typical network

Figure 2 – Measuring downstream congestion with the Re-ECN protocol

Figure 3 – Attack #1: Extreme Upstream Congestion

Figure 4 – Attack #2: Signal Poisoning with Both Markings

Figure 5 – Attack #3: Switching Negative Markings Combined with Extreme Upstream Congestion

initialise
variables n,e,r — s10

20

40

**update moving averages**

next packet,
read headers — s22

s42

Neutral — increase
n & e

non-re-
feedback

s24

s44

marking
?

Negative — increase n
decrease e

default

s46

Positive — decrease n
increase e

**classify
packet**

50

s52

s54

r > 0
?

N — increment r
by e

s30

s56

Y

s57

rate
limit

select packet for virtual
downstream congestion
marking

triggers
other
actions

s58

**downstream
congestion
algorithm**

decrement r
by n

Figure 6 – Process for measuring downstream congestion
from superimposed encodings

**EUROPEAN SEARCH REPORT**

Application Number

EP 11 25 0620

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Briscoe R: "Re-feedback: Freedom with Accountability for Causing Congestion in a Connectionless Internetwork", <br> , <br> 15 May 2009 (2009-05-15), pages 1-256, XP002665864, <br> Retrieved from the Internet: <br> URL:http://citeseerx.ist.psu.edu/viewdoc/summary?doi=10.1.1.188.4844 <br> [retrieved on 2011-12-14] | 1,2,4-8 | INV. <br> H04L12/56 |
| A | * page 1 * <br> * page 72 - page 85 * <br> * page 145 - page 167 * <br> * figures 8.3-8.5 * <br> * paragraph [6.1.2] * <br> * table 6.1 * <br> * paragraph [8.2.1] * <br> * paragraph [8.2.5] - paragraph * <br> ----- | 3 | |

TECHNICAL FIELDS SEARCHED (IPC)

H04L

The present search report has been drawn up for all claims

| Place of search | Date of completion of the search | Examiner |
|---|---|---|
| Berlin | 15 December 2011 | Tous Fajardo, Juan |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2005096566 A
- WO 2005109783 A
- WO 2006079845 A
- WO 2006082443 A
- WO 2011045553 A
- EP 10251106 A
- WO 2010106311 A
- EP 10250693 A

### Non-patent literature cited in the description

- Policing Congestion Response in an Internetwork Using Re-Feedback. **BRISCOE, B. ; JACQUET, A. ; CAIRANO-GILFEDDER, C.D. ; SALVATORI, A. ; SOPPERA, A. ; KOYABE, M.** Proc. ACM SIG-COMM'05, Computer Communication Review. ACM Press, August 2005, vol. 35, 277-288
- **RAMAKRISHNAN, K.K. ; FLOYD, S. ; BLACK, D.** The Addition of Explicit Congestion Notification (ECN) to IP. *Internet Engineering Task Force Request for comments 3168,* September 2001
- **S. FLOYD ; V. JACOBSON.** Random Early Detection gateways for Congestion Avoidance. *IEEE/ACM Transactions on Networking,* August 1993, vol. 1-4, 397-413
- **B. BRISCOE ; A. JACQUET ; T. MONCASTER ; A. SMITH.** Re-ECN: Adding Accountability for Causing Congestion to TCP/IP. *IETF Internet Draft draft-briscoe-tsvwg-re-ecn-tcp-09,* October 2010
- **B. BRISCOE ; A. JACQUET ; T. MONCASTER ; A. SMITH.** Re-ECN: A Framework for Adding Congestion Accountability to TCP/IP. *IETF Internet Draft draft-briscoe-tsvwg-re-ecn-tcp-motivation-02,* October 2010
- Internet Protocol. Internet Engineering Task Force STD. September 1981, vol. 5, 791
- **M. MATHIS ; B. BRISCOE.** Congestion Exposure (ConEx) Concepts and Abstract Mechanism. *IETF Internet Draft draft-ieff-conex-abstract-mech-01,* March 2011
- **JACQUET, A. ; BRISCOE, B. ; MONCASTER, T.** Policing Freedom to Use the Internet Resource Pool. *Proc Workshop on Re-Architecting the Internet,* December 2008